Europäisches Patentamt

European Patent Office

Office européen des brevets

(19)

(11) **EP 1 591 944 A1**

(12) **EUROPEAN PATENT APPLICATION**

(43) Date of publication:
**02.11.2005 Bulletin 2005/44**

(51) Int Cl.$^7$: **G06K 7/10**

(21) Application number: **05008180.1**

(22) Date of filing: **14.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **28.04.2004 JP 2004134385**

(71) Applicant: **NEC Electronics Corporation
Kawasaki, Kanagawa 211-8668 (JP)**

(72) Inventor: **Ohbuchi, Eisaku
Nakahara-ku Kawasaki Kanagawa 211-8668 (JP)**

(74) Representative: **Glawe, Delfs, Moll
Patentanwälte
Postfach 26 01 62
80058 München (DE)**

(54) **2D rectangular code symbol scanning device and 2D rectangular code symbol scanning method**

(57) A two-dimensional rectangular code symbol scanning device inputs two-dimensional image data containing two-dimensional rectangular code symbol data and detects code data corresponding to the two-dimensional rectangular code symbol data. The device has a projective transformation calculator for correcting distortion of the two-dimensional rectangular code symbol data by performing projective transformation of the two-dimensional rectangular code symbol data.

Fig. 1

EP 1 591 944 A1

**Description**

BACKGROUND OF THE INVENTION

1. Field of the Invention

The present invention relates to two-dimensional rectangular code symbol scanning device and method. Particularly, the present invention relates to two-dimensional rectangular code symbol scanning device and method capable of scanning distorted image data.

2. Description of Related Art

Barcodes, which are widely used today, confront the need for reduced-size and high-capacity data, which cannot be achieved with one-dimensional barcodes. In order to meet this need, two-dimensional (2D) codes have been developed. A 2D code capable of 360 degree high-speed scanning is proposed in Japanese Unexamined Patent Publication No. 07-254037, for example. The 2D codes, including a QR code, which is a registered trademark of DENSO WAVE INCORPORATED, are coming into wide use. Recently, some mobile phones have a 2D code scanning function.

When scanning a 2D code, scanning accuracy can deteriorate if the image is inclined or distorted. To overcome this problem when scanning image data obliquely, Japanese Unexamined Patent Publication No. 2002-24752, for example, proposes a scanning method that scans data after elliptical correction of a circular finder pattern. Japanese Unexamined Patent Publication No. 2002-49889, for example, proposes a scanning method that scans data using a direction module provided for a 2D code as a search key. Further, Japanese Unexamined Patent Publication No. 2003-168071, for example, proposes a scanning method that scans data after lens distortion correction and brightness correction. Various attempts have been made to improve scanning accuracy.

However, it has now been discovered that the methods of the above related arts are effective only for particular distortion and inclination and thus not versatile.

SUMMARY OF THE INVENTION

According to one aspect of the present invention, there is provided a two-dimensional rectangular code symbol scanning device inputting two-dimensional image data containing two-dimensional rectangular code symbol data and detecting code data corresponding to the two-dimensional rectangular code symbol data, the device which includes a projective transformation calculator for correcting distortion of the two-dimensional rectangular code symbol data by performing projective transformation of the two-dimensional rectangular code symbol data. This structure allows scanning various forms of image data with distortion and inclination.

According to another aspect of the present invention, there is provided a two-dimensional rectangular code symbol scanning, which includes inputting two-dimensional image data containing two-dimensional rectangular code symbol data; detecting a corner position of a symbol area of the two-dimensional rectangular code symbol data from the inputted two-dimensional image data and specifying the symbol area of the two-dimensional rectangular code symbol data based on the corner position; correcting distortion of the two-dimensional rectangular code symbol data by performing projective transformation of the specified two-dimensional rectangular code symbol data; and reading the corrected two-dimensional rectangular code symbol data and transforming the symbol data into code data corresponding to the data. This method allows scanning various forms of image data with distortion and inclination.

According to yet another aspect of the present invention, there is provided a two-dimensional rectangular code symbol scanning method for detecting code data contained in two-dimensional image data, which includes scanning two-dimensional image data; performing projective transformation for correcting distortion of the scanned two-dimensional image data; and detecting code data from the projective-transformed two-dimensional image data. This method allows scanning various forms of image data with distortion and inclination.

The present invention provides a 2D rectangular code symbol scanning device capable of scanning various forms of image data with distortion and inclination.

BRIEF DESCRIPTION OF THE DRAWINGS

The above and other objects, advantages and features of the present invention will be more apparent from the following description taken in conjunction with the accompanying drawings, in which:

Fig. 1 is a block diagram showing the structure of a 2D rectangular code symbol scanning device of the present invention;
Fig. 2 is a flowchart showing the process flow of a 2D rectangular code symbol scanning method of the present invention;
Fig. 3 is a flowchart showing the process flow of an area determination method of the present invention;
Fig. 4 is a view showing the image of an area determination method of the present invention;
Fig. 5 is a view showing the image of a corner specifying method of the present invention;
Fig. 6 is a view showing the image of a corner specifying method of the present invention;
Fig. 7 is a view showing the case where no corner symbol exists in the present invention;
Fig. 8 is a view showing the image of a corner specifying method of the present invention;

Fig. 9 is a view showing projective transformation of the present invention;

Fig. 10 is a view showing an example of an image including a 2D rectangular code symbol of the present invention;

Fig. 11 is a view showing an example of a 2D rectangular code symbol scanning method of the present invention; and

Fig. 12 is a view showing an example of a 2D rectangular code symbol scanning method of the present invention.

DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposed.

First Embodiment

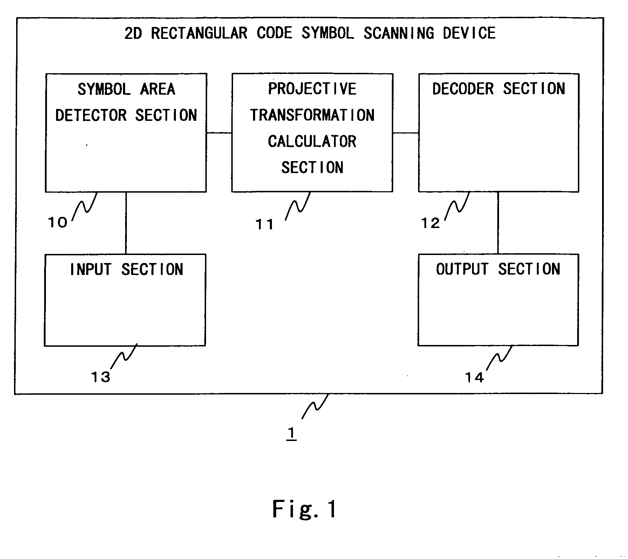

Fig. 1 is a block diagram showing the structure of a 2D rectangular code symbol scanning device 1 according to a first embodiment of the invention. The 2D rectangular code symbol scanning device 1 has a symbol area detector section 10, a projective transformation calculator section 11, a decoder section 12, an input section 13, and an output section 14. It is a mobile phone with camera function, for example.

The symbol area detector section 10, which is implemented by software, detects a corner position of a 2D rectangular symbol area from input image data and extracts the 2D rectangular symbol area from the detected corner position. The image data in the extracted 2D rectangular symbol area is inputted to the projective transformation calculator section 11. The projective transformation calculator section 11 corrects the image data in the 2D rectangular symbol area extracted by the symbol area detector section 10 so as to correct distorted or inclined image data to a normal, readable form. The corrected image data is inputted to the decoder section 12. The decoder section 12 reads the image data corrected by the projective transformation calculator section 11 and transforms it into code data. A reading section and a decoder section are not necessarily integral, but may be separated. The transformed code data is inputted to the output section 14.

The input section 13 inputs image data. For easy input of image data, if the 2D rectangular code symbol scanning device 1 is a mobile phone, the input section 13 is preferably a camera capable of taking images, such as Charge Coupled Device (CCD) camera and Complementary Metal-Oxide Semiconductor (CMOS) camera. The output section 14 outputs the transformed code data. The output section 14 may output the data to another communication terminal using communication functions, or, if the code data is image data, it may output the image data on a display.

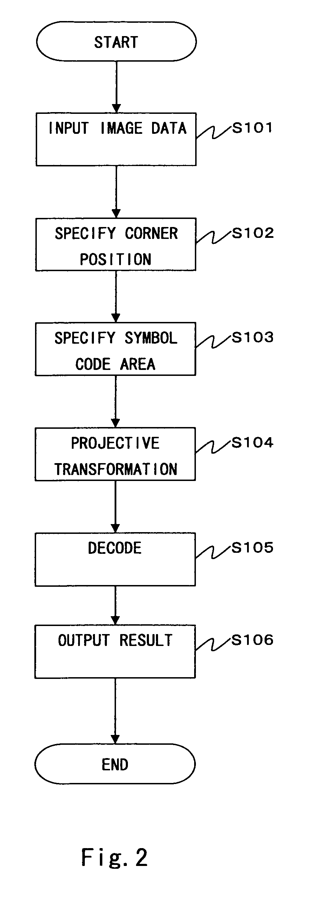

Referring then to the flowchart of Fig. 2, the process of scanning the 2D rectangular code symbol is described below.

First, the input section 13 inputs image data containing 2D rectangular code symbol data (S101). The image data may be inputted by taking a picture of the 2D rectangular code symbol with a built-in camera of a mobile phone or by receiving image file with a communication means. The input section 13 outputs the inputted image data to the symbol area detector section 10.

Receiving the image data, the symbol area detector section 10 specifies the corner position of the 2D rectangular code symbol data contained in the image data (S102). A method for specifying the corner position is detailed later.

After specifying the corner position, the symbol area detector section 10 specifies the area where 2D rectangular code symbol data is included based on the corner position (S103). The symbol area detector section 10 then outputs the image data in the specified area to the projective transformation calculator section 11.

Receiving the image data in the area from the symbol area detector section 10, the projective transformation calculator section 11 corrects the image data in the area by projective transformation (S104). The correction allows scanning an inclined image, distorted image, and image attached to a curved surface as normal, scannable 2D rectangular code symbol data. The protective transformation calculator section 11 then outputs the corrected image data to the decoder section 12.

Receiving the corrected image data from the projective transformation calculator section 11, the decoder section 12 reads the 2D rectangular code symbol data and transforms it into code data (S105). The data is read according to the specification of each 2D rectangular code symbol data. Since the data has been corrected to the data without inclination or distortion, even if the data contains data for the correction of inclination and distortion, it is not necessary to make a correction in accordance with this data. This allows higher-speed processing. The transformed code data is outputted from the output section 104 (S106).

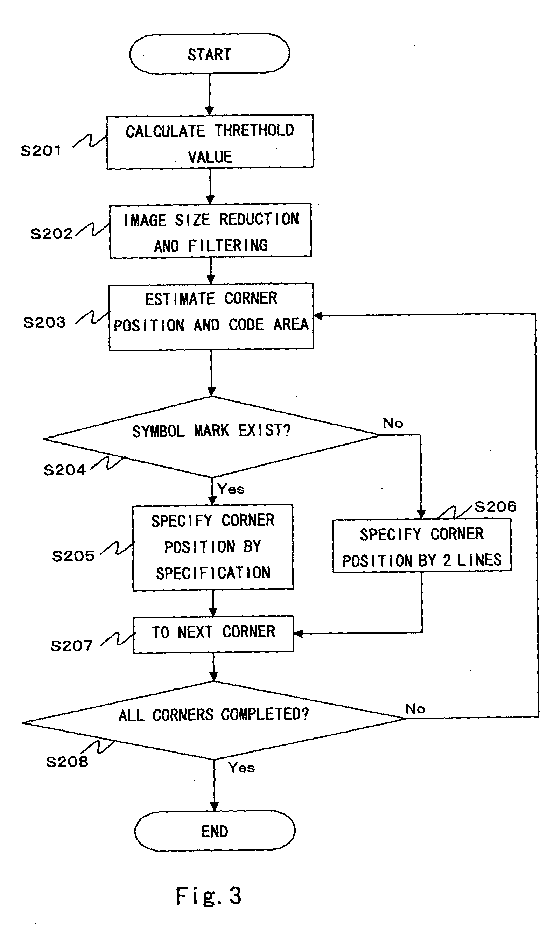

Now, the method for specifying the corner position of the 2D rectangular code symbol data contained in the image data is described with reference to the flowchart of Fig. 3.

If the 2D rectangular code symbol data is binary data of white and black, a threshold value of a boundary between black and white of the image data is calculated (S201). The calculation of the threshold value is as follows. First, the luminance values of all pixels in the image data are extracted and sorted. The middle value of the sorted luminance values is determined as a threshold value, which is a luminance value to be the boundary between black and white of the image data.

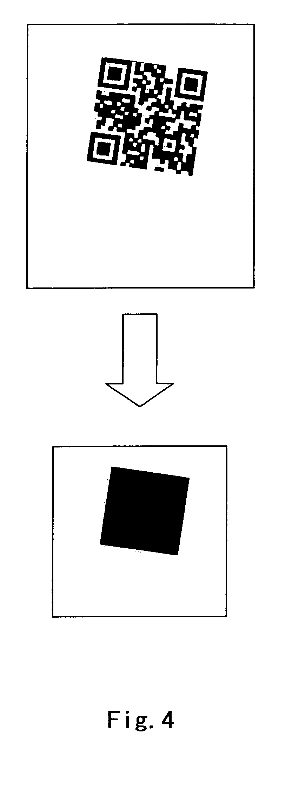

Then, the image data size is reduced and the code area is narrowed down (S202). The image data size is reduced to keep each side at the same scale. In this process, a luminance value is checked in each given range, such as 2-by-2 pixel, to see if it is black or white based on the threshold value calculated above. If the pixels within the range include at least one black point, it is determined as black by the filter process. The data reduction process and the filter process allow roughly distinguishing between the code area and a blank area in the vicinity of the code in the image data, thereby narrowing down the code area. This area is a tentative symbol area. Fig. 4 shows an example of narrowing down the code area by corner estimation.

After that, the corner position is estimated within the tentative symbol area (S203). The estimation of the corner position is as follows. First, the center coordinate in the tentative symbol area is (xc, yc). Based on the center coordinate, the image data is scanned from above toward the center, thereby detecting the tentative symbol area or the black part of the filtered image. If two or more points of contact exist on a scan line, the contact position with the scan line is recognized as a corner and the weighted center of a plurality of detected points of contact is recognized as a symbol area boundary point. This coordinate value is stored in a memory.

After the line scanning from above, the line is scanned from a different direction, such as at 45 degrees, and the coordinate value at the boundary point is stored in the memory. In this way, the image data is scanned in a plurality of directions, such as eight directions of left right, up, down, right slant and left slant.

After the line scanning from all directions, corner candidate points are settled to a certain number. For example, line scanning from eight directions narrows down the corner candidate points to sixteen points at maximum. From these candidate points, four points of rectangle corners are determined. The four rectangle corners are determined as follows.

First, a corner point of image, such as a point closest to the upper left origin coordinate (0, 0), is set as an estimated corner point. Then, a point closest to the point which is point-symmetric about the center coordinate to the estimated corner point is set as an estimated corner point which is symmetric to the above estimated corner point. Then, remaining two estimated corner points are determined from the perpendicular bisector of the two estimated corner points.

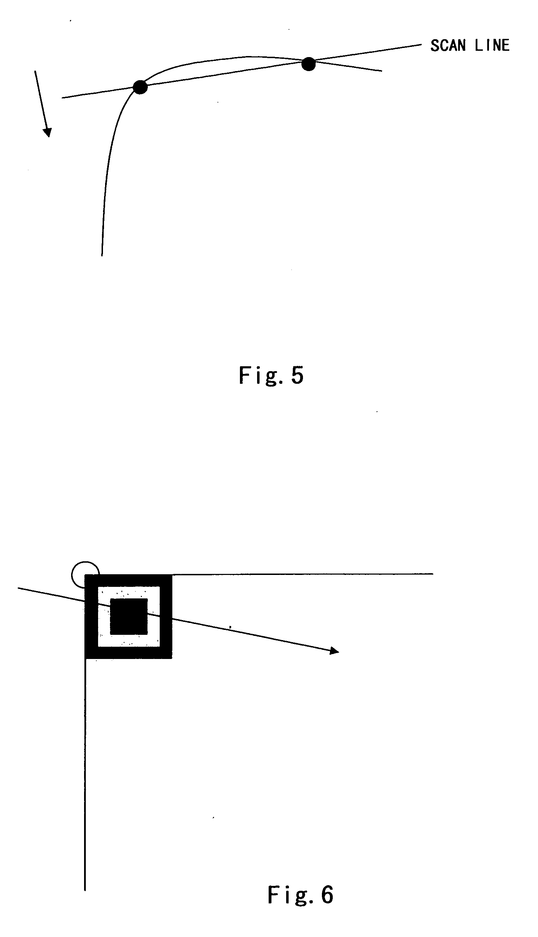

From the four estimated corner points determined in this way, corner positions are specified. If a corner position specifying method is regulated by the specification of 2D symbol code with a symbol mark placed at a corner and so on (S204), the corner position is determined according to the corner position specifying method regulated by the specification (S205). For example, QR code allows detecting a symbol mark at a corner by scanning the image and detecting a symbol where the ratio of black:white:black:white:black is 1:1:3:1:1, and determining the corner position by the symbol mark. Fig. 6 shows the case of QR code.

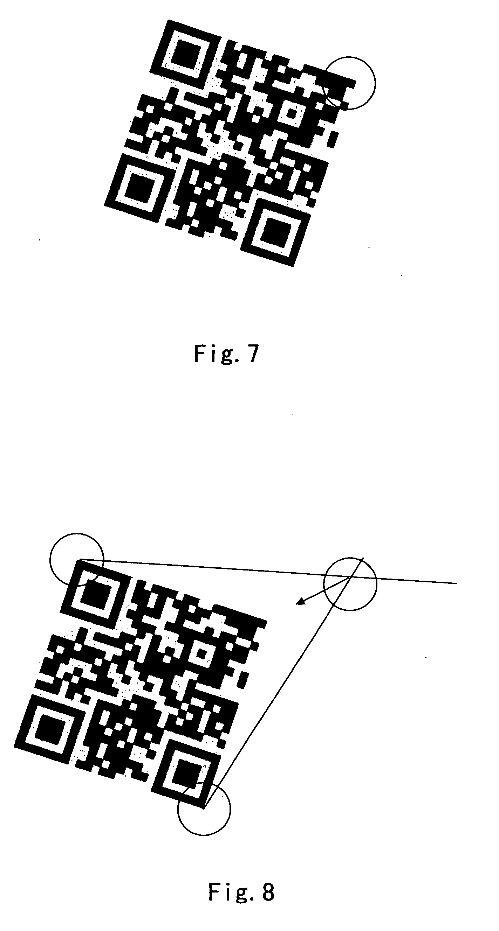

If a symbol mark is located not at the corner but at the center or no symbol mark exists and no corner position specifying method is regulated in specification, the corner is determined as follows (S206). First, two line segments connecting two corner points or estimated corner points different from opposing corner of an estimated corner point for specifying the corner position, and an estimated corner point for specifying the corner position are generated. Then, a search is performed by shifting the points estimated as a corner until the two line segments touch each side. For example, even if the QR code has a point without a symbol mark at one position as shown in Fig. 7. Fig. 8 is an image diagram for specifying a corner with two line segments.

This process is performed for all the four estimated corner points (S207), thereby specifying the corner positions. If the four corner positions are specified (S208), the area including 2D rectangular code symbol data is specified.

The process of correcting image data is described below. Even if the area including 2D rectangular code symbol data is specified, when the image data in this area is distorted, the image cannot be scanned accurately. Correction of the image data allows increasing scanning accuracy.

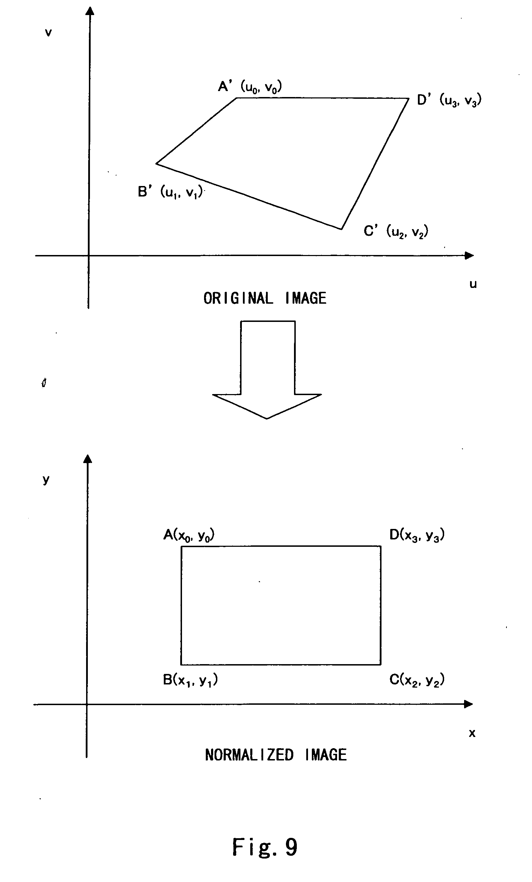

The image data is corrected by projective transformation. Fig. 9 is the image diagram of the projective transformation. The formula for the projective transformation is:

$$u=(c0x+c1y+c2)/(c6x+c7y+1)$$

$$v=(c3x+c4y+c5)/(c6x+c7y+1)$$

If the coordinates of four corners before transformation are: A (x0, y0), B (x1, y1), C(x2, y2), D(x3, y3), and the coordinates of four corners after transformation are: A' (u0, v0), B'(ul, v1), C' (u2, v2), D'(u3, v3), the constants c0 to c7 of the transformation formula can be given by the coordinates of total eight points before and after transformation. Using this formula, projective transformation is performed on the data in the area, thereby correcting image data. The corrected image data is outputted to the decoder section 12.

Second Embodiment

A 2D rectangular code symbol scanning method of the present invention allows scanning of the image of a 2D symbol code attached to a curved surface such as a can, for example. The method of detecting corners and the method of specifying the area including 2D rectangular code symbol data are the same as in the first embodiment and thus not described here.

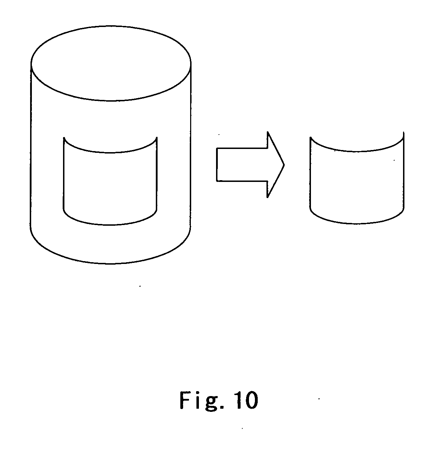

Fig. 10 is a diagram showing an example of extracting the area including 2D rectangular code symbol data. In this case, the image data is corrected as follows.

First, a difference is calculated in the vertical direction with respect to the midpoint of each side. When the difference becomes equal to or more than a predetermined threshold value, the image data in this area is determined as image data containing symbol code placed on a curved surface.

If it is determined to be placed on a curved surface, a perpendicular bisector is generated with respect to the side where the difference is maximum to divide the area. The corners of the divided area is detected, and if a difference between line segment connecting the detected corners and the area becomes equal to or more than a predetermined threshold value, the area may be divided again in the same way. Then, correction by projective transformation is performed on each divided area. The method of projective transformation is the same as in the first embodiment.

After the correction by projective transformation, pieces of the corrected data are combined and decoded. By dividing data and correcting each data separately, it is possible to scan the 2D rectangular code symbol data placed on a curved surface.

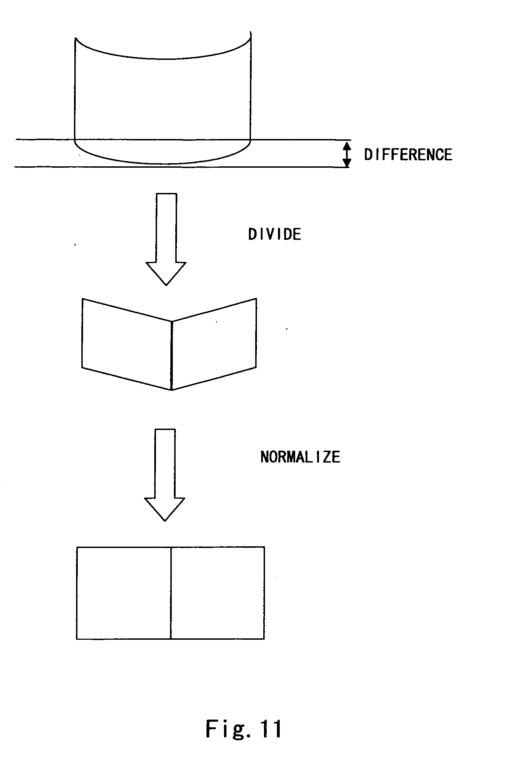

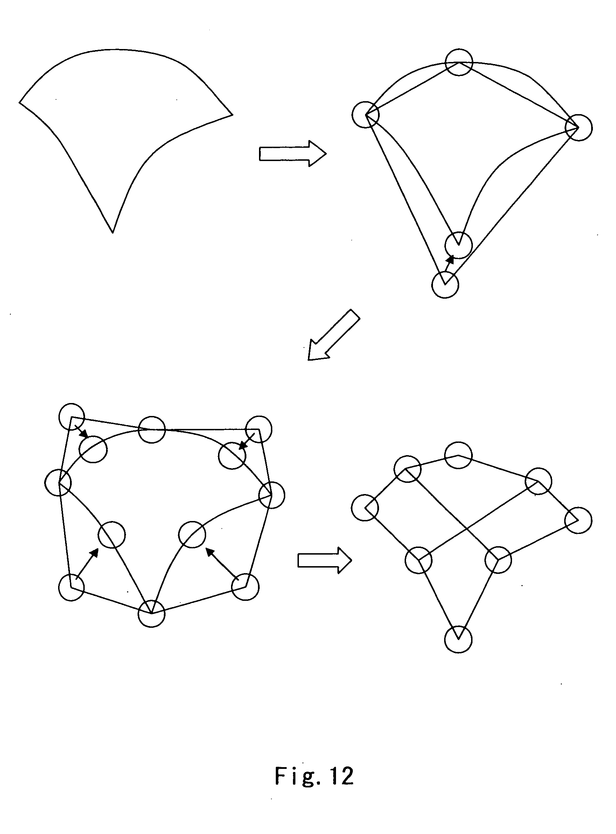

Similarly, it is possible to scan the 2D rectangular code symbol data attached to a given curved surface. Fig. 12 shows an example of extracting the area including 2D rectangular code symbol data. In such a case, the method of Fig. 11 can fail to determine that the image is placed on a curved surface. To avoid this, image data is corrected as follows in this case.

First, all candidate points when estimating corner points are set as estimated corner points. Then, corner points are specified from the all corner points by the same way as in the first embodiment.

Based on the corner points specified in this way, the area is divided into quadrates. Then, correction by projective transformation is performed on each divided area.

After the correction by projective transformation, pieces of the corrected data are combined and decoded. This allows correction of data attached to any free-form curved surface, thereby enabling scanning of 2D rectangular code symbol data.

Other Embodiments

Though the present invention is described with an example of QR code, the invention allows scanning of all 2D rectangular code symbol data.

It is apparent that the present invention is not limited to the above embodiment that may be modified and changed without departing from the scope and spirit of the invention.

**Claims**

1. A two-dimensional rectangular code symbol scanning device inputting two-dimensional image data containing two-dimensional rectangular code symbol data and detecting code data corresponding to the two-dimensional rectangular code symbol data, the device comprising:

 a projective transformation calculator (11) for correcting distortion of the two-dimensional rectangular code symbol data by performing projective transformation of the two-dimensional rectangular code symbol data.

2. The two-dimensional rectangular code symbol scanning device according to claim 1, further comprising a symbol area detector (10) detecting a corner position of a symbol area of the two-dimensional rectangular code symbol data from the two-dimensional image data and specifying the symbol area of the two-dimensional rectangular code symbol data based on the corner position.

3. The two-dimensional rectangular code symbol scanning device according to claim 1, further comprising a decoder (12) reading the two-dimensional rectangular code symbol data corrected by the projective transformation calculator (11) and transforming the symbol data into the code data.

4. The two-dimensional rectangular code symbol scanning device according to claim 2, further comprising a decoder (12) reading the two-dimensional rectangular code symbol data corrected by the projective transformation calculator (11) and transforming the symbol data into the code data.

5. The two-dimensional rectangular code symbol scanning device according to claim 2, wherein the symbol area detector (10) detects a tentative symbol area by reducing the two-dimensional image data, referring to the reduced image data per reference unit, and extracting a range where a pixel with a prescribed luminance value or above exists in the referred image data, and detects a corner based on the detected tentative symbol area.

6. The two-dimensional rectangular code symbol scanning device according to claim 2, wherein the symbol area detector (10) detects corners by generating two line segments connecting two opposing corner points which are already detected or estimated and one of candidate corners for a corner different from the two corners and shifting the candidate corner until the two line segments touch each side of the symbol area of the two-dimensional rectangular code symbol data.

7. The two-dimensional rectangular code symbol scanning device according to claim 5, wherein the symbol area detector (10) detects corners by generating two line segments connecting two opposing corner points which are already detected or estimated and one of candidate corners for a corner different from the two corners and moving the candidate corner until the two line segments touch each side of the symbol area of the two-dimensional rectangular code symbol data.

8. The two-dimensional rectangular code symbol scanning device according to claim 5, wherein
the two-dimensional image data is rectangular image data,
the two-dimensional rectangular code symbol data is square symbol data,
the symbol area detector (10) comprises a unit of performing line scan from a plurality of directions which shifts a line in parallel from an outer side to an inner side of the tentative symbol area to search an intersection with a boundary of the tentative symbol area, a unit of setting a plurality of intersections searched by the line scan to candidate corners, and a unit of determining four corners from the candidate corners, the four corner being a first point which is closest to the corner of the two-dimensional rectangular code symbol data, a second point which is point-symmetric to the first point with respect to a weighted center of the plurality of candidate corners, and a third and a fourth point which are closest to a perpendicular bisector of the first and the second point, thereby detecting corners.

9. The two-dimensional rectangular code symbol scanning device according to claim 4, wherein
the symbol area detector (10) divides the symbol area of the two-dimensional rectangular code symbol data by a perpendicular bisector of a side on a rectangle closest to a point on the boundary of the symbol area of the two-dimensional rectangular code symbol data where the difference is maximum when a difference between a side on a rectangle generated by connecting the detected corners and the boundary of a symbol area of the two-dimensional rectangular code symbol data becomes equal to or more than a predetermined value, and specifies the symbol area of the two-dimensional rectangular code symbol data to each divided area,
the projective conversion calculator corrects distortion of the two-dimensional rectangular code symbol data by performing projective transformation of each of the divided two-dimensional rectangular code symbol data specified by the symbol area detector (10), and
the decoder (12) combines and reads each of the two-dimensional rectangular code symbol data corrected by the projective conversion calculator.

10. The two-dimensional rectangular code symbol scanning device according to claim 4, wherein
the symbol area detector (10), after detecting corners, sets an estimated point in an outer side of the symbol area of the two-dimensional rectangular code symbol data from a midpoint of a line segment connecting the corners, generates two line segments connecting the corners at both ends of the line segment connecting the corners and the estimated point, searches a new corner by shifting the estimated point until the two line segments touch each side of the symbol area of the two-dimensional rectangular code symbol data, divides the symbol area of the two-dimensional rectangular code symbol data by a line segment connecting the new corner, and specifies the symbol area of the two-dimensional rectangular code symbol data for each divided area,
the projective conversion calculator corrects distortion of each of the divided two-dimensional rectangular code symbol data by performing projective transformation of each of the two-dimensional rectangular code symbol data specified by the symbol area detector (10), and
the decoder (12) combines and reads each of the divided two-dimensional rectangular code symbol data corrected by the projective conversion calculator.

11. The two-dimensional rectangular code symbol scanning device according to claim 2, wherein the two-dimensional rectangular code symbol data is symbol data comprising black and white binary image, and
the symbol area detector (10) sorts a luminance value of each pixel in a target image, binarizes the two-dimensional image data with a middle value as a luminance threshold value, and detects a corner position of the symbol area of the two-dimensional rectangular code symbol data based on the binarized two-dimensional image data.

12. The two-dimensional rectangular code symbol scanning device according to claim 3, wherein the two-dimensional rectangular code symbol data is symbol data comprising black and white binary image, and
the symbol area detector (10) sorts a luminance value of each pixel in a target image, binarizes the two-dimensional image data with a middle value as a luminance threshold value, and detects a corner position of the symbol area of the two-dimensional rectangular code symbol data based on the binarized two-dimensional image data.

13. The two-dimensional rectangular code symbol scanning device according to claim 4, wherein the two-dimensional rectangular code symbol data is symbol data comprising black and white binary image, and

the symbol area detector (10) sorts a luminance value of each pixel in a target image, binarizes the two-dimensional image data with a middle value as a luminance threshold value, and detects a corner position of the symbol area of the two-dimensional rectangular code symbol data based on the binarized two-dimensional image data.

14. The two-dimensional rectangular code symbol scanning device according to claim 1, wherein
the two-dimensional rectangular code symbol scanning device is a mobile phone, and
the two-dimensional image data is inputted by a camera provided for the mobile phone.

15. The two-dimensional rectangular code symbol scanning device according to claim 2, wherein
the two-dimensional rectangular code symbol scanning device is a mobile phone, and
the two-dimensional image data is inputted by a camera provided for the mobile phone.

16. The two-dimensional rectangular code symbol scanning device according to claim 3, wherein
the two-dimensional rectangular code symbol scanning device is a mobile phone, and
the two-dimensional image data is inputted by a camera provided for the mobile phone.

17. A two-dimensional rectangular code symbol scanning method comprising:

inputting two-dimensional image data containing two-dimensional rectangular code symbol data;
detecting a corner position of a symbol area of the two-dimensional rectangular code symbol data from the inputted two-dimensional image data and specifying the symbol area of the two-dimensional rectangular code symbol data based on the corner position;
correcting distortion of the two-dimensional rectangular code symbol data by performing projective transformation of the inputted two-dimensional rectangular code symbol data; and
reading the corrected two-dimensional rectangular code symbol data and transforming the symbol data into code data corresponding to the data.

18. The two-dimensional rectangular code symbol scanning method according to claim 17, wherein the inputting two-dimensional image data includes detecting a corner position of a symbol area of the two-dimensional rectangular code symbol data from the inputted two-dimensional image data and specifying the symbol area of the two-dimensional rectangular code symbol data based on the corner position.

19. The two-dimensional rectangular code symbol scanning method according to claim 18, wherein the symbol area of the two-dimensional rectangular code symbol data is specified by detecting a tentative symbol area by reducing the two-dimensional image data, referring to the reduced image data per reference unit, and extracting a range where a pixel with a prescribed luminance value or above exists in the referred image data and detects a corner based on the detected tentative symbol area, and performing line scan from a plurality of directions which shifts a line in parallel from an outer side to an inner side of the tentative symbol area to search an intersection with a boundary of the tentative symbol area, setting a plurality of intersections searched by the line scan to candidate corners and determining from the candidate corners four corners of a first point which is closest to the corner of the two-dimensional rectangular code symbol data, a second point which is point-symmetric to the first point with respect to a weighted center of the plurality of candidate corners, and a third and a fourth point which are closest to a perpendicular bisector of the first and the second point, thereby detecting corners.

20. The two-dimensional rectangular code symbol scanning method according to claim 18, wherein the symbol area of the two-dimensional rectangular code symbol data is specified by generating two line segments connecting two opposing corner points which are already detected or estimated and one of candidate corners for a corner different from the two corners, and shifting the candidate corner until the two line segments touch each side of the symbol area of the two-dimensional rectangular code symbol data.

**2D RECTANGULAR CODE SYMBOL SCANNING DEVICE**

SYMBOL AREA DETECTOR SECTION
10

PROJECTIVE TRANSFORMATION CALCULATOR SECTION
11

DECODER SECTION
12

INPUT SECTION
13

OUTPUT SECTION
14

1

Fig. 1

START

INPUT IMAGE DATA — S101

SPECIFY CORNER POSITION — S102

SPECIFY SYMBOL CODE AREA — S103

PROJECTIVE TRANSFORMATION — S104

DECODE — S105

OUTPUT RESULT — S106

END

Fig. 2

Fig. 3

Fig. 4

Fig. 5

Fig. 6

Fig. 7

Fig. 8

Fig. 9

**Fig. 10**

DIFFERENCE

DIVIDE

NORMALIZE

Fig. 11

Fig. 12

# EP 1 591 944 A1

**European Patent Office**

## EUROPEAN SEARCH REPORT

Application Number

EP 05 00 8180

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 383 070 A (SHARP KABUSHIKI KAISHA) 21 January 2004 (2004-01-21) * paragraphs [0008] - [0010], [0057] - [0060]; figures 6,7 * | 1-5, 14-18 | G06K7/10 |
| X | US 2003/123710 A1 (NAKAZAWA TSUTOMU ET AL) 3 July 2003 (2003-07-03) * paragraphs [0051] - [0053]; figure 6 * | 1-5, 14-18 | |
| A | US 5 378 881 A (ADACHI ET AL) 3 January 1995 (1995-01-03) * figures 3,4 * | 1-20 | |
| A | EP 0 720 113 A (NIPPONDENSO CO., LTD; DENSO CORPORATION) 3 July 1996 (1996-07-03) * column 13, line 33 - line 45; figure 6 * | 1-20 | |
| A | EP 0 672 994 A (NIPPONDENSO CO., LTD; DENSO CORPORATION) 20 September 1995 (1995-09-20) * abstract * | 1-20 | TECHNICAL FIELDS SEARCHED (Int.Cl.7) G06K |
| A | US 5 742 041 A (LIU ET AL) 21 April 1998 (1998-04-21) * the whole document * | 1-20 | |

The present search report has been drawn up for all claims

| Place of search | Date of completion of the search | Examiner |
|---|---|---|
| Munich | 5 July 2005 | Fichter, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**ANNEX TO THE EUROPEAN SEARCH REPORT
ON EUROPEAN PATENT APPLICATION NO.**                    EP 05 00 8180

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2005

| Patent document cited in search report | | | Publication date | Patent family member(s) | | | Publication date |
|---|---|---|---|---|---|---|---|
| EP 1383070 | A | | 21-01-2004 | JP | 2004054529 A | | 19-02-2004 |
| | | | | CN | 1512434 A | | 14-07-2004 |
| | | | | EP | 1383070 A2 | | 21-01-2004 |
| | | | | US | 2004011872 A1 | | 22-01-2004 |
| US 2003123710 | A1 | | 03-07-2003 | JP | 2003168084 A | | 13-06-2003 |
| | | | | CN | 1466099 A | | 07-01-2004 |
| US 5378881 | A | | 03-01-1995 | JP | 3187936 B2 | | 16-07-2001 |
| | | | | JP | 5334479 A | | 17-12-1993 |
| | | | | CN | 1079321 A ,C | | 08-12-1993 |
| | | | | KR | 275007 B1 | | 15-12-2000 |
| EP 0720113 | A | | 03-07-1996 | JP | 2867904 B2 | | 10-03-1999 |
| | | | | JP | 8180125 A | | 12-07-1996 |
| | | | | DE | 69523273 D1 | | 22-11-2001 |
| | | | | DE | 69523273 T2 | | 25-07-2002 |
| | | | | EP | 0720113 A2 | | 03-07-1996 |
| | | | | US | 5691527 A | | 25-11-1997 |
| EP 0672994 | A | | 20-09-1995 | JP | 7254037 A | | 03-10-1995 |
| | | | | DE | 69518098 D1 | | 31-08-2000 |
| | | | | DE | 69518098 T2 | | 22-03-2001 |
| | | | | EP | 0672994 A1 | | 20-09-1995 |
| | | | | US | 5726435 A | | 10-03-1998 |
| US 5742041 | A | | 21-04-1998 | DE | 19722439 A1 | | 04-12-1997 |
| | | | | JP | 10063772 A | | 06-03-1998 |

EPO FORM P0459

For more details about this annex : see Official Journal of the European Patent Office, No. 12/82